# EUROPEAN PATENT APPLICATION

(11) **EP 2 683 218 A2**
(43) Date of publication of application: **08.01.2014**
(21) Application number: 13003328.5
(22) Date of filing: 01.07.2013
(51) Int. Cl.: H05B 6/12, F24C 7/08

(54) **Method and arrangement of residual heat gradient indication of cooktops**

(30) Priority: 05.07.2012 PL 39980912
(71) Applicant: Diehl AKO Stiftung & Co. KG, 88239 Wangen (DE)
(72) Inventor: Kowalski, Krzysztof, 55-003 Nadolice Wielkie (PL)
(74) Representative: Diehl Patentabteilung

(57) **Abstract**

The invention relates to the method of residual heat gradient indication of induction cooktops, in which the cooktop or oven temperature is measured by a sensor 2 located underneath a heating element 1, a digital or an analog signal, in proportion to the measured temperature, is generated by a sensor 2, and then is sent to a microcontroller unit (MCU) 3; a signal generated by the temperature sensor 2 is processed digitally to produce a control signal that is used to control the brightness or colour of a temperature display 4; a signal from the temperature sensor 2 is converted by the microcontroller unit 3 to a signal that controls the display 4, information in the form of digital data about an actual, desired brightness of a temperature indicator is obtained from the microcontroller unit (MCU) 3 for the display, to which data the corresponding colour and/or brightness of displayed symbols are directly assigned, indications on the display are being changed in real time, in proportion to provided temperature information.

## Description

The present invention relates to the method and arrangement of residual heat (RH) gradient indication of cooktops, i.e. the method and arrangement of gradient indication of the fact that after a cooking process is finished, a temperature of cooking zone is still high. The invention finds application especially in electrical cooktops.

United States Patent Document No. 6797297 B2 discloses a solution entitled Indicating device and method for operating such a device' that describes a statistical method of residual heat indication of a cooking appliance. According to this solution, a switched-on state of the cooking appliance is detected; a warning signal of residual heat is being sent from a heat indicator as long as line voltage is applied to the cooking appliance; a delay interval value is established by a counter system; after the switching-off of the cooking appliance connected to line voltage occurs, and then later in time, the residual heat indicator is switched off by a counter system in dependence on a delay interval value; a presence of the line voltage at the cooking appliance is detected by a line voltage detector; a delay interval value is decremented by the counter system; information is stored in a memory of the counter system as long as a time delay interval is greater than zero, and, after a line voltage interruption, the residual heat indicator remains activated, if a delay interval value is greater than zero.

In the method of residual heat gradient indication of induction cooktops of the invention, the cooktop or oven temperature is measured by a sensor located underneath a heating element, a digital or an analog signal is generated by a sensor, in proportion to the measured temperature, and then is sent to a microcontroller unit (MCU); a signal generated by the temperature sensor is processed digitally to produce a control signal that is used to control the brightness or colour of the temperature display; a signal from the temperature sensor is concerned by the microcontroller unit (MCU) to a signal that controls the display; information in the form of digital data about an actual, desired brightness of a temperature indicator is obtained from the microcontroller unit (MCU) for the display, to which data the corresponding colour and/or brightness of displayed symbols are directly assigned, indications on the display are being changed in real time, in proportion to provided temperature information.

Preferably, the display is controlled with a pulse width modulation signal (PWM), when the display is the LED display.

Preferably, the display is controlled with a digital signal in the form of communication protocol, when the display is the LCD or TFT-LCD display.

Preferably, a control signal is used to control the brightness and/or colour of the temperature display indicator.

Preferably, if the heating element temperature is above 80°C, then the display indicator lights with the brightness of 100%.

Preferably, if the heating element temperature is above 80°C, then the display indicator lights in red.

Preferably, if the heating element temperature is of 70°C to 79°, then the display indicator lights with the brightness of 50%.

Preferably, if the heating element temperature is of 70°C to 79°, then the display indicator lights in orange.

Preferably, if the heating element temperature is of 40°C to 69°, then the display indicator lights with the brightness of 25%

Preferably, if the heating element temperature is of 40°C to 69°, then the display indicator lights in yellow.

Preferably, if the heating element temperature is below 40°C, then the display indicator does not light.

Preferably, if the heating element temperature is below 40°C, then the display indicator lights in blue. 100% is assumed to be the maximum possible to achieve brightness of the display, and, this amount of filling is assigned thereto.

The arrangement of residual heat gradient indication of induction cooktops comprises a heating element, a temperature sensor located underneath said heating element transferring data about the temperature to a microcontroller connected thereto, said microcontroller is connected to a display.

Preferably, the microcontroller has elements for conversion of data into a pulse width modulation signal (PWM), where the microcontroller transfers to the display a pulse width modulation signal (PWM) in proportion to the temperature.

Preferably, the display is the LED display.

Preferably, the display is the LCD display.

Preferably, the display is the TFT-LCD display. The invention informs a user about the temperature state of a specific heating zone (in the event of high temperature that may have harmful effects on people, the display indicator lights with high brightness, whereas, in the event of lower less harmful temperature the display indicator lights with low brightness).

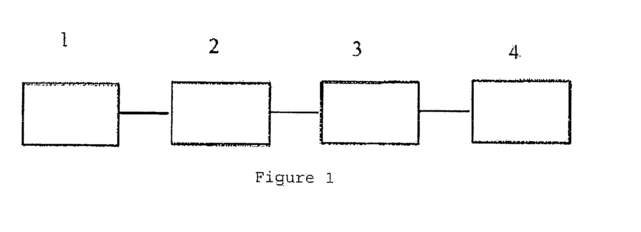

In an embodiment, the subject of the invention is presented on the illustration, on which Figure 1 represents a schematic diagram of the arrangement of residual heat gradient indication.

In the method of residual heat gradient indication of induction cooktops an outside vessel, for example, a bottom of a previously warmed up pot is the heating element 1. The warmth is emanating from the bottom to a ceramic panel, beneath which is located the temperature sensor 2 in the form of an NTC thermistor. This temperature sensor 2 is used to measure the cooktop temperature and to generate a digital or an analog signal in proportion to the measured temperature. A signal generated by the temperature sensor 2 is processed digitally to produce a control signal that is used to control the brightness of the temperature display 4. The temperature sensor 2 is connected, in the electronic resistance measurements system that converts the temperature to a resistance value, to a signal conversion element - microcontroller 3.

The conversion of a signal from the temperature sensor 2 to a signal that controls the display 4 takes place in the microcontroller block 3. First, the value of measured resistance is converted to a temperature value with the use of temperature sensor 2 characteristic. Then, the microcontroller 3 converts a received signal to a width modulated signal PWM that controls the display block. Information in the form of digital data about an actual, desired brightness of a temperature indicator is obtained from the microcontroller unit (MCU) 3 for the display, to which data the corresponding colour and/or brightness of displayed symbols are directly assigned, afterwards indications on the display are being changed in real time, in proportion to provided temperature information. The value of pulse filling is generated in a way that enables to achieve the following brightness values:
- if the heat element temperature is above 80°C, then the display indicator lights with the brightness of 100%.
- if the heating element temperature is of 70°C to 79°, then the display indicator lights with the brightness of 50%.
- if the heating element temperature is of 40°C to 69°, then the display indicator lights with the brightness of 25%.
- if the heating element temperature is under 40°C, then the indicator is turned off.

Whereas 100% is assumed to be the maximum possible to achieve brightness of the display, and, this amount of filling is assigned thereto.

The whole operation is repeated periodically, every 10 seconds for each cooking zone.

In the second embodiment of the invention, when the display is the LCD display, the heating element 1 and the temperature sensor 2 have the same functions as in the example described above. It is characteristic that the microcontroller 3 first processes data to temperature values, and then to signals for communication protocol 12C for a particular LCD display controller 4. These data are prepared according to the following indicators:
This signal enables to achieve the following colour sequences:
   - if the heating element temperature is above 80°C, then the display indicator lights in red.
   - if the heating element temperature is of 70°C to 79°, then the display indicator lights in orange.
   - if the heating element temperature is of 40°C to 69°, then the display indicator lights in yellow.
   - if the heating element temperature is below 40°C, then the display indicator lights in blue.

The whole operation is repeated periodically, every 10 seconds for each cooking zone.

The arrangement of residual heat gradient indication comprises a heating element 1 connected to a temperature sensor 2, said temperature sensor 2 being an NCT thermistor is connected to a microcontroller 3. The microcontroller 3 processes a signal received from the sensor to a pulse width modulated (PWM) signal that controls a display indicator 4 being the LED display.

The invention finds application in controllers for home appliances, and particularly, for induction cooktops.

### Reference designations:

1 - Heating element
2 - Temperature sensor
3 - Microcontroller
4 - Temperature display

## Claims

1. A method of residual heat gradient indication of induction cooktops, **characterised in that**
- the cooktop or oven temperature is measured by a sensor (2) located underneath a heating element (1),
- a digital or an analog signal, in proportion to the measured temperature, is generated by a sensor (2) and then is sent to a microcontroller unit (MCU) (3),
- a signal generated by the temperature sensor (2) is processed digitally to produce a control signal that is used to control the brightness or colour of a temperature display (4),
- a signal from the temperature sensor (2) is converted by the microcontroller unit (MCU) (3) to a signal that controls the display (4),
- information in the form of digital data about an actual, desired brightness of a temperature indicator is obtained from the microcontroller unit (MCU) (3) for the display, to which data the corresponding colour and/or brightness of displayed symbols are directly assigned,
- indications on the display are being changed in real time, in proportion to provided temperature information.

2. The method according to claim 1, **characterised in that** the display (4) is controlled with a pulse width modulation signal (PWM), when the display is the LED display.

3. The method according to claim 1, **characterised in that** the display (4) is controlled with a digital signal in the form of communication protocol, when the display is the LCD or TFT-LCD display.

4. The method according to claim 1, **characterised in that** the control signal is used to control the brightness and/or colour of the temperature display indicator (4).

5. The method according to any one of claims 1 to 4, **characterised in that** if the heating element (1) temperature is above 80°C, then the display indicator (4) lights with the brightness of 100%.

6. The method according to any one of claims 1 to 4, **characterised in that** if the heating element (1) temperature is above 80°C, then the display indicator (4) lights in red.

7. The method according to any one of claims 1 to 4, **characterised in that** if the heating element (1) temperature is of 70°C to 79°C, then the display indicator (4) lights with the brightness of 50%.

8. The method according to any one of claims 1 to 4, **characterised in that** if the heating element (1) temperature is of 70°C to 79°C, then the display indicator (4) lights in orange.

9. The method according to any one of claims 1 to 4, **characterised in that** if the heating element (1) temperature is of 40°C to 69°C, then the display indicator (4) lights with the brightness of 25%.

10. The method according to any one of claims 1 to 4, **characterised in that** if the heating element (1) temperature is of 40°C to 69°C, then the display indicator (4) lights in yellow.

11. The method according to any one of claims 1 to 4, **characterised in that** if the heating element (1) temperature is below 40°C, then the display indicator (4) does not light.

12. The method according to any one of claims 1 to 4, **characterised in that** if the heating element (1) temperature is below 40°C, then the display indicator (4) lights in blue.

13. An arrangement of residual heat gradient indication of induction cooktops, **characterised in that** it comprises a heating element (1), a temperature sensor (2) located underneath said heating element transferring data about the temperature to a microcontroller (3) connected thereto, where said microcontroller (3) is connected to a display (4).

14. The arrangement according to claim 13, **characterised in that** the microcontroller (3) contains elements for conversion of data into a pulse width modulation signal (PWM), where the microcontroller (3) transfers to the display (4) a pulse width modulation signal (PWM) in proportion to the temperature.

15. The arrangement according to claim 13, **characterised in that** the display (4) is the LED display.

16. The arrangement according to claim 13, **characterised in that** the display (4) is the LCD display.

17. The arrangement according to claim 13, **characterised in that** the display (4) is the TFT-LCD display.
